# EUROPÄISCHE PATENTSCHRIFT

(11) **EP 2 949 094 B1**
(45) Veröffentlichungstag und Bekanntmachung des Hinweises auf die Patenterteilung: **16.12.2020**
(21) Anmeldenummer: 14700229.9
(22) Anmeldetag: 06.01.2014
(51) Int. Cl.: H04L 29/06

(54) **VERFAHREN ZUR AUTHENTISIERUNG EINES NUTZERS GEGENÜBER EINEM AUTOMAT**
METHOD FOR AUTHENTICATING A USER WITH RESPECT TO A MACHINE
PROCÉDÉ D'AUTHENTIFICATION D'UN USAGER VIS-À-VIS D'UN DISTRIBUTEUR AUTOMATIQUE

(30) Priorität: 23.01.2013 DE 102013201027
(43) Veröffentlichungstag der Anmeldung: 02.12.2015
(73) Patentinhaber: Bundesdruckerei GmbH, 10969 Berlin (DE)
(72) Erfinder: SCHRÖDER, Martin, 12437 Berlin (DE); MORGNER, Frank, 15537 Grünheide (DE)
(74) Vertreter: Richardt Patentanwälte PartG mbB
(86) Internationale Anmeldenummer: PCT/EP2014/050096
(87) Internationale Veröffentlichungsnummer: WO 2014/114476

(56) Entgegenhaltungen:
- VAPEN A ET AL: "2-clickAuth Optical Challenge-Response Authentication", AVAILABILITY, RELIABILITY, AND SECURITY, 2010. ARES '10 INTERNATIONAL CONFERENCE ON, IEEE, PISCATAWAY, NJ, USA, 15. Februar 2010 (2010-02-15), Seiten 79-86, XP031652960, ISBN: 978-1-4244-5879-0

## Beschreibung

Die Erfindung betrifft ein Verfahren zur Authentisierung eines Nutzers gegenüber einem Automat, wie z.B. einem Bankautomat oder einem Verkaufsautomat, ein Nutzergerät, insbesondere ein Telekommunikationsgerät, wie zum Beispiel ein Smartphone, ein Computerprogrammprodukt, einen Automat und ein elektronisches System.

Aus "Snap2Pass: Consumer-friendly Challenge-Response Authentication with a Phone", Ben Dodson et al., Computer Science Department, Stanford University, ist ein Challenge-Response-Authentifizierungssystem für Web-Applikationen bekannt. Zum Einloggen sendet der Webserver an den PC-Browser eines Nutzers einen QR-Code, der eine kryptografische Challenge beinhaltet. Der Nutzer nimmt ein Bild des QR-Codes mit der Kamera seinen Mobiltelefons auf, woraufhin die kryptografische Response von dem Mobiltelefon über eine Mobiltelefonverbindung an den Webserver gesendet wird.

Dieses Verfahren kann in der Form von "Snap2Pay" auch als Bezahlverfahren eingesetzt werden (vergleiche "Secure, Consumer-Friendly Web Authentication and Payments with a Phone", Ben Dodson et al., Computer Science Department, Stanford University).

Aus "2-clickAuth Optical Challenge-Response Authentication", Anna Vapen et al., Availability, Reliability, and Security, 2010, ARES '10 International Conference on, IEEE, Piscataway, NJ, USA, 15. Februar 2010, Seiten 79-86, ist ein Authentifizierungsverfahren auf Basis einer optischen Challenge-Response-Lösung bekannt, bei der eine Web-Kamera und ein Kamera-Handy sowie zweidimensionale Strichcodes für die Kommunikation zwischen einem Mobiltelefon und einem Computer verwendet werden. Hierbei wird ein Identitätsprovider in dem dezentralen Authentifizierungssystem OpenID implementiert, so dass das entsprechende Authentifizierungsverfahren allen Nutzer von Webseiten, die OpenID unterstützen, zur Verfügung steht. Meldet sich ein Nutzer mit seinem OpenID-Pseudonym bei einer OpenID unterstützenden Webseite an, wird er zu der Webseite des Identitätsprovider weitergeleitet, gegenüber der er sich mittels des optischen Challenge-Response-Verfahrens authentifizieren kann.

Der Erfindung liegt demgegenüber die Aufgabe zugrunde, ein verbessertes Verfahren zur Authentisierung eines Nutzers gegenüber einem Automat zu schaffen sowie ein entsprechendes Nutzergerät, einen Automat, ein elektronisches System sowie entsprechende Computerprogrammprodukte.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Unter der "Authentisierung eines Nutzers" wird hier der Nachweis einer behaupteten Eigenschaft des Nutzers und/oder des Nutzergeräts verstanden, insbesondere der Nachweis der Identität des Nutzers oder des Nutzergeräts. Die Begriffe "Authentisierung" und "Authentifizierung" werden hier synonym verwendet. Die Authentisierung kann auch eine Autorisierung beinhalten, das heißt die Einräumung zum Beispiel eines bestimmten Nutzungs-, Zugriffs- oder Zutrittsrechts als Ergebnis einer erfolgreichen Authentisierung.

Unter einem "Automat" wird hier eine Vorrichtung oder ein aus mehreren Vorrichtungen bestehendes System verstanden, welche vorbestimmte Abläufe selbsttätig ausführt. Insbesondere kann es sich bei einem Automat um einen Verkaufsautomat, zum Beispiel zum Verkauf von Getränken oder Zigaretten, um einen Bankautomat, insbesondere einen Automat zum Abheben von Bargeld oder ein Bankterminal zur Vornahme von Banktransaktionen, wie zum Beispiel Überweisungen, ein Zugangskontrollsystem, insbesondere ein Zutrittskontrollsystem zur Kontrolle des Zutritts zu einem Gebäude, oder zur Kontrolle der Nutzung eines Computers, wie zum Beispiel eines PCs, handeln. Insbesondere kann es sich bei dem Automat um einen Ticketautomat zum Verkauf von Tickets, zum Beispiel einen Fahrkartenautomat, einen Automat zum Verkauf von Eintrittskarten, wie zum Beispiel von Kino- oder Theatertickets oder Eintrittskarten für Großveranstaltungen, wie zum Beispiel Fußballspielen, handeln.

Unter einer "Challenge" wird hier die sogenannte Challenge in einem Challenge-Response-Verfahren verstanden, insbesondere in einem auf einem asymmetrischen kryptografischen Schlüsselpaar oder einem symmetrischen Schlüssel basierenden Challenge-Response-Verfahren.

Bei Verwendung eines asymmetrischen kryptografischen Schlüsselpaars wird beispielsweise zur Authentisierung eine gestellte Challenge von dem Authentisierenden mit seinem privaten Schlüssel signiert, um den Besitz des privaten Schlüssels, der zu dem entsprechenden öffentlichen Schlüssel gehört, nachzuweisen. Eine andere Möglichkeit ist die Verschlüsselung der Challenge mit dem öffentlichen Schlüssel des Authentisierenden, der seinen Besitz des entsprechenden privaten Schlüssels dadurch nachweist, dass er die Challenge entschlüsseln kann.

Bei Verwendung eines symmetrischen Schlüssels kann die unilateral two pass authentication gemäß ISO/IEC 9798-2 durchgeführt werden. Dabei besitzen beide Kommunikationspartner denselben symmetrischen Schlüssel K. Der Authentisierer sendet als Challenge eine Zufallszahl. Der Authentisierende weist nun den Besitz des Schlüssels nach, indem er die Challenge mit dem Schlüssel K verschlüsselt wieder zurück sendet. Der Authentisierer entschlüsselt die Response mit K und vergleicht den erhaltenen Wert mit dem Wert der Challenge. Um sog. Known Plaintext Angriffe zu verhindern, bei dem ein Angreifer durch das Wissen der Challenge und der Response den Schlüssel K ermitteln kann, kann der Authentisierende die Challenge noch mit einer Nonce konkatinieren, bevor er sie verschlüsselt.

Unter einer "Response" wird hier die Response in einem Challenge-Response-Verfahren verstanden, das heißt die Antwort, die der Authentisierende aufgrund einer gestellten Challenge erzeugt.

Unter einem "Muster" wird hier ein statisches optisches Muster verstanden, das auf einer Anzeigevorrichtung ausgegeben wird, und in das Informationen codiert sind, beispielsweise ein Barcode, insbesondere ein eindimensionaler, zweidimensionaler, high capacity color Barcode, MaxiCode, QR-Code oder DataMatrix-Code, oder eine zeitliche Reihenfolge mehrerer Muster, wobei durch die Muster und deren zeitliche Reihenfolge eine Information codiert ist, wie das z.B. bei einem Flickercode der Fall ist. Der "Flickercode" ist an sich für das sogenannte chipTAN-comfort oder Smart-TAN-optic online Banking Verfahren der Sparkassen bzw. Volksbanken bekannt.

Als Authentisierender wirkt hier das dem Nutzer zugeordnete Nutzergerät und/oder ein dem Nutzer zugeordnetes Secure Element.

Unter einer "Nonce" wird hier insbesondere eine Zeichenkombination, das heißt eine Zahlen- und/oder Buchstabenkombination, verstanden, die im Allgemeinen für eine einmalige Verwendung vorgesehen ist. Insbesondere kann es sich bei einer Nonce um eine Zufallszahl oder Pseudozufallszahl handeln.

Unter einem "Secure Element" oder "SE" wird hier ein Security-Token oder Sicherheitstoken verstanden, welcher auch als Authentication Token oder Cryptographic Token bezeichnet wird. Hierbei kann es sich zum Beispiel um einen USB-Stick, eine Chipkarte, eine Speicherkarte, insbesondere SD-Karte, insbesondere Mikro-SD-Karte oder einen anderen ID-Token handeln.

Unter einem "ID-Token" wird hier insbesondere ein Hardwaretoken, wie z.B. ein Wert- oder Sicherheitsdokument verstanden, das heißt insbesondere ein Ausweisdokument, das heißt ein ID-Dokument, insbesondere ein elektronischer Personalausweis, Reisepass, Aufenthaltstitel, Führerschein, Firmenausweis oder ein Zahlungsmittel, wie zum Beispiel eine Banknote, eine Kreditkarte oder ein sonstiger Berechtigungsnachweis, wie zum Beispiel ein Frachtbrief oder ein Visum, insbesondere eine Chipkarte, insbesondere mit RFID- und/oder NFC-Schnittstelle und/oder kontaktbehafteter Schnittstelle. Der ID-Token kann auch einen anderen Formfaktor haben; er kann z.B. als Schlüsselanhänger ausgebildet sein, wie z.B. als iButton, oder als Aufkleber, wie z.B. als MyMax NFC Sticker von TwinLinx.

Ein Secure Element kann über eine kontaktbehaftetete, kontaktlose oder dualmode Schnittstelle verfügen, insbesondere eine RFID, NFC und/oder Bluetooth Schnittstelle und/oder eine kontaktbehaftete Chipkartenschnittstelle.

Ausführungsformen der Erfindung sind besonders vorteilhaft, da die Kommunikation zwischen dem Nutzergerät und dem Automat ausschließlich auf optischen Wege verlaufen kann, sodass keine Kommunikation zwischen dem Nutzergerät und dem Automat auf elektronischem Wege, wie zum Beispiel über ein Netzwerk, erforderlich ist. Hierdurch werden insbesondere Relay-Angriffe unterbunden. Eventuelle Angriffe auf den optischen Kommunikationskanal zwischen dem Nutzergerät und dem Automat sind für den Nutzer augenfällig und können ohne Weiteres entdeckt werden. Ferner werden solche Angriffe dadurch erschwert, dass der Automat weitgehend gekapselt ausgebildet sein kann, d.h. ohne typische Schnittstellen, wie ein Chipkartenlesegerät oder eine Tastatur, welche Angriffspunkte für Manipulationsversuche bilden können.

Ein weiterer Vorteil ist, dass der Automat außer der optischen Schnittstelle, das heißt seiner Anzeigevorrichtung und seinem optischen Sensor, nicht zwingend über weitere Schnittstellen verfügen muss, sodass der Automat besser gegen Hardwaremanipulationen abgesichert werden kann. Insbesondere kann die optische Schnittstelle des Automaten versiegelt werden, um sie gegen Hardwaremanipulationen zu schützen, zum Beispiel mittels einer vor dem optischen Sensor und/oder der Anzeigevorrichtung angeordneten schlagfesten Kunststoff oder Glasscheibe.

Nach Ausführungsformen der Erfindung hat das Nutzergerät Zugriff auf einen elektronischen Speicher, zum Beispiel eines Secure Elements, in dem der private Schlüssel des Nutzers und ein oder mehrere Attribute des Nutzers, wie zum Beispiel dessen Geburtsdatum, gespeichert sind.

Zur Erzeugung der Response auf eine Challenge wird dann zum Beispiel durch das Secure Element der private Schlüssel verwendet und außerdem wird das Attribut aus dem Speicher ausgelesen. Neben der Response wird das Attribut von dem Nutzergerät an den Automat optisch übertragen. Der Automat kann das Attribut mit einem vorgegebenen Kriterium vergleichen, dessen Erfüllung Voraussetzung für die Erbringung einer gewünschten Funktion des Automaten ist, z. B. die Erbringung eines angeforderten Dienstes oder des Verkaufs eines angeforderten Produktes, welches einer Altersbeschränkung unterliegt, wie das zum Beispiel bei Zigaretten oder alkoholischen Getränken der Fall ist.

Nach einer Ausführungsform der Erfindung hat der Nutzer einen Identifikator, der diesen Nutzer eindeutig identifiziert. Dieser Identifikator ist in dem elektronischen Speicher gespeichert, auf den das Nutzergerät Zugriff hat, sowie auch in einer Datenbank, auf die der Automat Zugriff hat. In der Datenbank ist für jeden registrierten Nutzer mit dem Identifikator des betreffenden Nutzers als Zugriffsschlüssel ein Nutzerprofil gespeichert, welches beispielsweise ein Benutzerkonto zum Beispiel für die Durchführung eines Prepaid- oder Postpaid-Bezahlverfahrens beinhaltet. Insbesondere kann das Benutzerprofil einen Guthabenbetrag beinhalten. Aufgrund einer Challenge antwortet das Nutzergerät dann zusätzlich mit dem Identifikator, der auf optischem Wege von dem Nutzergerät an den Automat übertragen wird, sodass der Automat das Guthaben des Nutzers entsprechend belasten kann.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen elektronischen Systems,
- Figur 2: ein Flussdiagramm einer Ausführungsform eines erfindungsgemäßen Verfahrens,
- Figur 3: ein Blockdiagramm einer weiteren Ausführungsform eines erfindungsgemäßen elektronischen Systems,
- Figur 4: ein Flussdiagramm einer weiteren Ausführungsform eines erfindungsgemäßen Verfahrens,
- Figur 5: ein Blockdiagramm einer weiteren Ausführungsform eines erfindungsgemäßen elektronischen Systems.

Im Weiteren werden identische oder einander entsprechende Elemente der nachfolgenden Ausführungsformen mit gleichen Bezugszeichen gekennzeichnet.

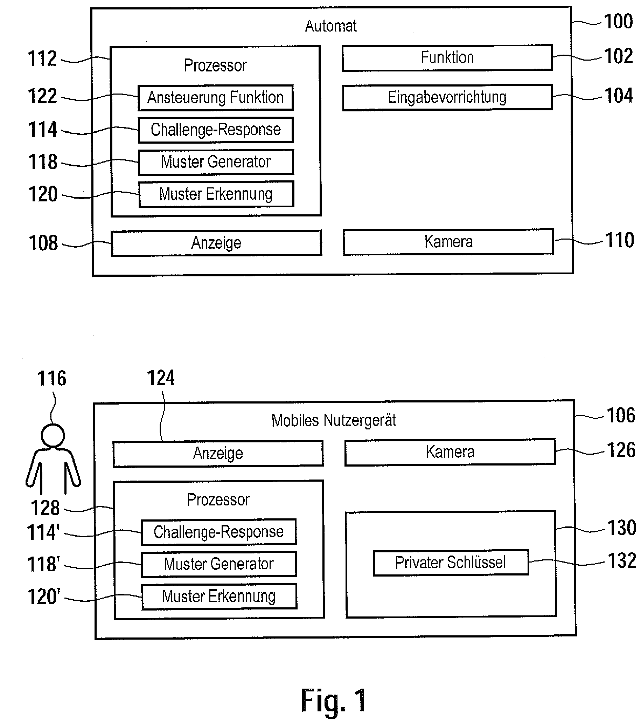

Die Figur 1 zeigt einen Automaten 100, wie zum Beispiel eine Zugangskontrollvorrichtung. Der Automat 100 muss nicht notwendigerweise mit einem Netzwerk verbunden sein, sondern kann eigenständig, das heißt "stand-alone" betrieben werden.

Der Automat 100 hat eine Funktion 102, bei der es sich hier zum Beispiel um eine elektromechanische Ver- und Entriegelungsvorrichtung für ein Drehkreuz oder eine automatische Tür handeln kann. Der Automat 100 hat ferner eine Eingabevorrichtung 104, bei der es sich hier zum Beispiel um einen Sensor handeln kann, um die Anwesenheit des Nutzers vor dem Drehkreuz oder der automatischen Tür zu sensieren und damit dessen Anforderung das Drehkreuz bzw. die automatische Tür zu passieren.

Der Automat 100 hat eine optische Schnittstelle zur Kommunikation mit einem mobilen Nutzergerät 106, die eine Anzeigevorrichtung 108, das heißt ein sogenanntes Display, und einen optischen Sensor, wie zum Beispiel eine Kamera 110, beinhaltet.

Der Automat 100 hat zumindest einen Prozessor 112 zur Ausführung eines Programmmoduls 114, durch welches die den Automat 100 betreffenden Schritte eines Challenge-Response-Verfahrens zur Authentisierung eines dem Nutzergerät 106 zugeordneten Nutzers 116 durchgeführt werden. Ferner dient der Prozessor 112 zur Ausführung eines Programmmoduls 118, welches zur Erzeugung eines optischen Musters dient, beispielsweise zur Erzeugung eines QR-Codes.

Der Prozessor 112 dient ferner zur Ausführung eines Programmmoduls 120, durch dessen Ausführung ein von der Kamera 110 aufgenommenes Muster, beispielsweise ebenfalls eines QR-Codes, erkannt und decodiert wird.

Der Prozessor 112 dient ferner zur Ausführung eines Programmmoduls 122 durch dessen Ausführung die Funktion 102 angesteuert wird, das heißt hier die Ansteuerung der Ver- und Entriegelungsvorrichtung.

Das Nutzergerät 106 hat ebenfalls eine optische Schnittstelle zur Kommunikation mit dem Automat 100, welcher eine Anzeigevorrichtung 124 und eine Kamera 126 beinhaltet. Das Nutzergerät 106 hat ferner zumindest einen Prozessor 128 zur Ausführung von Programmmodulen 114', 118' und 120', die in ihren Funktionalitäten den Programmmodulen 114, 118 bzw. 120 entsprechend.

Das Programmmodul 114' dient zur Durchführung der das Nutzergerät 106 betreffenden Schritte des Challenge-Response-Verfahrens, das heißt zur Beantwortung einer von dem Programmmodul 114 des Automat 100 erzeugten Challenge durch eine entsprechende Response. Das Programmmodul 118' dient zur Erzeugung eines optischen Musters zur Anzeige auf der Anzeigevorrichtung 124 und das Programmmodul 120' dient zur Erkennung und Decodierung eines Musters, welches durch die Kamera 126 aufgenommen wird.

Das Nutzergerät 106 kann einen elektronischen Speicher 130 beinhalten, in dem ein privater Schlüssel 132 eines dem Nutzer 116 zugeordneten asymmetrischen kryptografischen Schlüsselpaars gespeichert ist. Der dazugehörige öffentliche Schlüssel sowie - bei Verwendung einer Public Key Infrastructure (PKI) - das zugehörige Zertifikat der PKI, können ebenfalls in dem Nutzergerät 106 und/oder in dem Automat 100 gespeichert sein. Alternativ kann anstelle des privaten Schlüssels 132 ein symmetrischer Schlüssel für die Verwenung in einem auf einem symmetrischen Schlüssel basierenden Challenge-Response-Protokoll in dem Speicher 130 gespeichert ein.

Der elektronische Speicher 130 kann einen integralen Bestandteil des Nutzergeräts 106 bilden oder er kann zu einem Secure Element, insbesondere einer Chipkarte, insbesondere einer SIM-Karte, gehören, die sich in einem Karten-Lesegerät des Nutzergeräts 106 befindet.

Wenn der Nutzer 116 das Drehkreuz bzw. die automatische Tür passieren möchte, ist Voraussetzung dafür dessen Authentisierung gegenüber dem Automat 100. Hierzu wird wie folgt vorgegangen:
1. Der Nutzer 116 begibt sich mit seinem Nutzergerät 106 in den Erfassungsbereich des Sensors der Eingabevorrichtung 104.
2. Aufgrund der Sensierung des Nutzers 106 wird die Ausführung des Programmmoduls 114 gestartet, welches daraufhin eine Challenge erzeugt. Bei der Challenge kann es sich beispielsweise um eine Nonce handeln.
3. Nach der Erzeugung der Challenge wird das Programmmodul 118 gestartet, welches ein erstes Muster erzeugt, in welches die Challenge codiert ist, wie zum Beispiel einen QR-Code. Das Programmmodul 118 steuert dann die Anzeigevorrichtung 108 zur Ausgabe dieses ersten Musters an.
4. Der Nutzer 116 nimmt dieses erste Muster von der Anzeigevorrichtung 108 mithilfe der Kamera 126 seines Nutzergeräts 106 auf.
5. Daraufhin wird die Ausführung des Programmmoduls 120' gestartet, um das in dieser Aufnahme beinhaltete Muster zu erkennen und zu decodieren. Hierdurch empfängt das Nutzergerät 106 die Challenge.
6. Nach dem Empfang der Challenge wird die Ausführung des Programmmoduls 114' gestartet, um eine Response auf die Challenge zu erzeugen. Dies kann so erfolgen, dass die Challenge, das heißt beispielsweise die Nonce, mithilfe des privaten Schlüssels 132 signiert wird.
7. Daraufhin wird die Ausführung des Programmmoduls 118' gestartet, um ein zweites Muster zu erzeugen, welches die Response beinhaltet, das heißt beispielsweise die signierte Nonce einschließlich des zu dem privaten Schlüssel 132 gehörenden öffentlichen Schlüssels sowie - bei Verwendung einer PKI - des Zertifikats.
8. Das Programmmodul 118' steuert dann die Anzeigevorrichtung 124 an, sodass das zweite Muster auf der Anzeigevorrichtung 124 angezeigt wird.
9. Der Automat 100 nimmt dann mit seiner Kamera 110 das zweite Muster von der Anzeigevorrichtung 124 auf, woraufhin durch Ausführung des Programmmoduls 120 das zweite Muster erkannt und decodiert wird, sodass der Automat 100 die in dem zweiten Muster beinhaltete Response empfängt.
10.Die Response wird durch Ausführung des Programmmoduls 114 ausgewertet und auf Korrektheit geprüft.
11. Wenn die Response korrekt ist, so wird durch Ausführung des Programmmoduls 122 die Funktion 102 des Automaten 100 angesteuert, beispielsweise also das Drehkreuz bzw. die automatische Tür entriegelt oder geöffnet, sodass der Nutzer 116 passieren kann.

Besonders vorteilhaft bei der hier betrachteten Ausführungsform ist, dass der Automat 100 vollständig gekapselt sein kann, sodass Manipulationsversuche von vornherein ausgeschlossen sind.

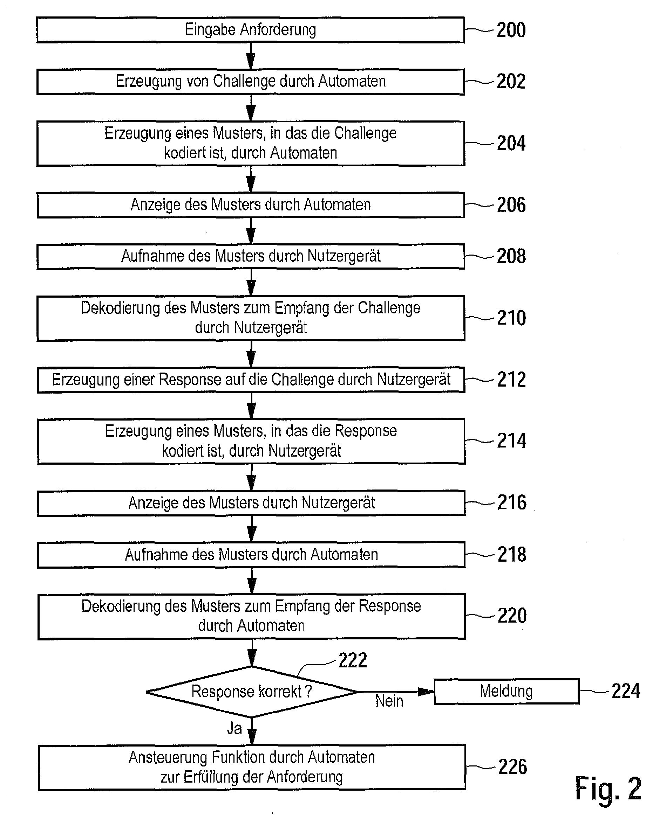

Die Figur 2 zeigt ein entsprechendes Flussdiagramm. In dem Schritt 200 wird in den Automat 100 eine Anforderung eingegeben. Dies kann sensorisch erfolgen, beispielsweise indem ein Näherungssensor des Automaten 100 die Anwesenheit des Nutzers 116 sensiert und damit dessen Anforderung zum Passieren beispielsweise eines Drehkreuzes oder einer automatischen Tür, wenn der Automat als Zugangskontrollvorrichtung ausgebildet ist.

Die Eingabevorrichtung 104 kann auch einen integralen Bestandteil der Anzeigevorrichtung 108 bilden, die dann als sogenannter Touchscreen ausgebildet ist. Über die Anzeige 108, die die Eingabevorrichtung 104 als integralen Bestandteil beinhaltet, kann der Nutzer 116 dann eine gewünschte Funktion 102 des Automat 100 auswählen, zu deren Erbringung die Authentisierung des Nutzers 116 erforderlich ist.

In dem Schritt 202 erzeugt der Automat 100 aufgrund der Eingabe der Anforderung eine Challenge, wie zum Beispiel eine Nonce. Der Automat 100 generiert dann ein erstes optisches Muster, wie zum Beispiel einen QR-Code, in welches die Challenge codiert ist (Schritt 204). Dieses erste Muster wird durch den Automaten auf der Anzeigevorrichtung 108 in dem Schritt 206 angezeigt.

Der Nutzer 116 nimmt dann mithilfe der Kamera 126 seines Nutzergeräts 106 das erste Muster von der Anzeigevorrichtung 108 auf (Schritt 208), woraufhin das erste Muster von dem Nutzergerät 106 in der Aufnahme erkannt und decodiert wird, sodass das Nutzergerät damit die Challenge empfängt.

In dem Schritt 212 erzeugt das Nutzergerät eine Response auf diese Challenge, welche in dem Schritt 214 in ein zweites Muster codiert wird, das dann in dem Schritt 216 auf der Anzeigevorrichtung 124 des Nutzergeräts 126 angezeigt wird. Dieses zweite Muster nimmt der Automat 100 dann mit seiner Kamera 110 auf (Schritt 218), erfasst das zweite Muster in der Aufnahme und decodiert das zweite Muster in dem Schritt 220, sodass der Automat 100 damit die Response des Nutzergeräts 106 empfängt.

In dem Schritt 222 prüft dann der Automat 100, ob die Response korrekt ist. Ist dies nicht der Fall, so wird der Ablauf in dem Schritt 224 z.B. durch die Ausgabe einer entsprechenden Meldung auf der Anzeigevorrichtung 108 und/oder durch ein akustisches Signal abgebrochen. Im gegenteiligen Fall gilt der Nutzer 116 gegenüber dem Automat 100 als authentisiert, sodass in dem Schritt 226 dann die zuvor in dem Schritt 200 angeforderte Funktion des Automat 100 freigegeben wird und die Funktion von dem Automat 100 erbracht wird.

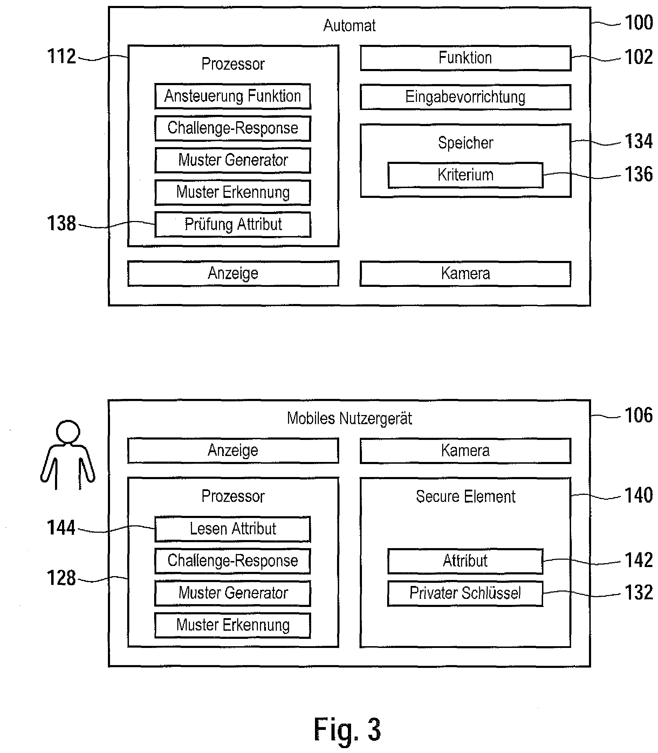

Die Figur 3 zeigt eine weitere Ausführungsform eines erfindungsgemäßen elektronischen Systems. Gemäß der Ausführungsform nach Figur 3 ist zur Erbringung der angeforderten Funktion 102 des Automat 100 neben der Authentisierung des Nutzers zusätzlich erforderlich, dass das Nutzergerät 106, ein Secure Element 140 und/oder der Nutzer 116 selbst ein vorgegebenes Kriterium erfüllt, wie zum Beispiel dass der Nutzer 116 ein Mindestalter hat und/oder über ein Mindestguthaben verfügt.

Hierzu hat der Automat 100 einen elektronischen Speicher 134, in dem das vorgegebene Kriterium 136 gespeichert ist. Der Prozessor 112 dient bei der hier betrachteten Ausführungsform ferner zur Ausführung eines Programmmoduls 138, zur Prüfung, ob der Nutzer 116 dieses Kriterium 136 erfüllt.

Das Nutzergerät 106 verfügt bei der hier betrachteten Ausführungsform über ein Secure Element 140, in dem neben dem privaten Schlüssel 132 ein Attribut des Nutzers 116 gespeichert ist, wie zum Beispiel dessen Geburtsdatum oder ein Guthaben des Nutzers 116.

Der Prozessor 128 des Nutzergeräts 106 dient hier ferner zur Ausführung eines Programmmoduls 144 zum Lesen des Attributs 142.

Die Authentisierung des Nutzers 116 gegenüber dem Automaten erfolgt bei der hier betrachteten Ausführungsform analog zu den Ausführungsformen gemäß Figuren 1 und 2.

Zusätzlich wird nach dem Empfang der Challenge durch das Nutzergerät 106 durch Ausführung des Programmmoduls 144 das Attribut 142 aus dem Secure Element 140 ausgelesen und in das zweite Muster codiert. Durch Aufnahme und Decodierung des zweiten Musters durch den Automat 100 empfängt dieser dann neben der Response auch dieses Attribut 142. Durch Ausführung des Programmmoduls 138 prüft der Automat 100, ob das Attribut 142 das vorgegebene Kriterium 136 erfüllt, beispielsweise also, ob der Nutzer 116 ein vorgegebenes Mindestalter hat oder über ein vorgegebenes Mindestguthaben verfügt.

Für den Fall, dass sowohl die Response korrekt ist als auch das Attribut 142 das Kriterium 136 erfüllt, wird die Funktion 102 von dem Automat 100 freigegeben und ausgeführt.

Zusätzlich kann vorgesehen sein, dass sich der Nutzer 116 zunächst gegenüber dem Nutzergerät 106 authentifizieren muss, wie z.B. durch Eingabe einer PIN. Dadurch wird sichergestellt, dass der Nutzer 116 auch tatsächlich dem Nutzergerät 106 bzw. dem Secure Element 140 zugeordnet ist. Alternativ reicht der Besitz des Nutzergeräts 106 aus, um diese Zuordnung zu gewährleisten.

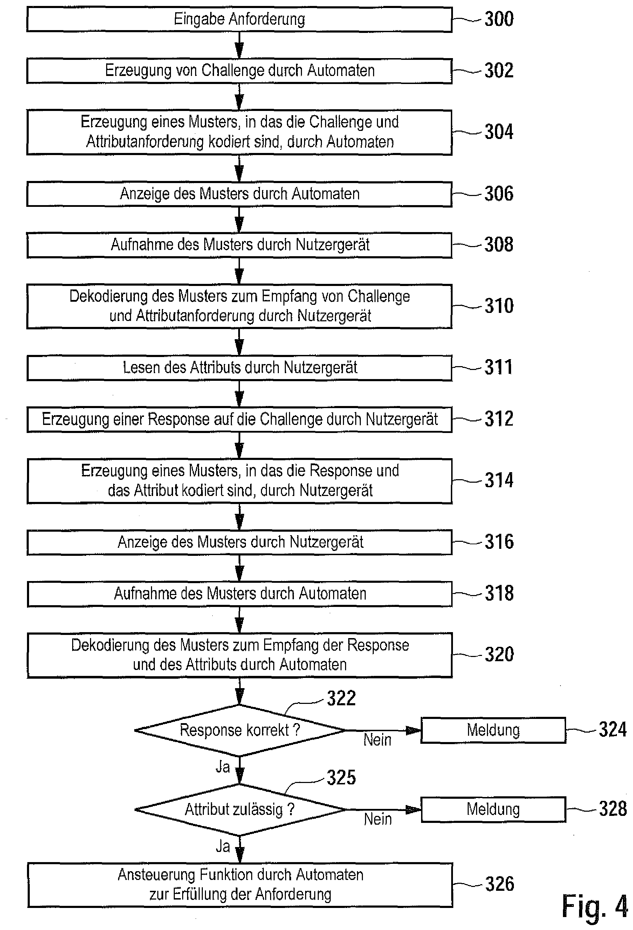

Die Figur 4 zeigt ein entsprechendes Flussdiagramm, wobei die Schritte 300 bis 326 den Schritten 200 bis 226 entsprechen. Der Schritt 304 unterscheidet sich von dem Schritt 204 dadurch, dass neben der Challenge eine Attributanforderung in dem ersten Muster codiert ist, sodass der Automat 100 dem Nutzergerät 106 signalisiert, dass das Nutzergerät ein bestimmtes Attribut, beispielsweise das Attribut 142, an den Automat 100 übertragen soll.

In dem Schritt 310 wird diese Attributanforderung neben der Challenge von dem Nutzergerät 106 empfangen und in dem Schritt 311 wird daraufhin dieses Attribut 142 von dem Nutzergerät 106 ausgelesen. In dem Schritt 314 wird dementsprechend neben der Response auch dieses Attribut 142 in das zweite Muster codiert, sodass der Automat 100 in dem Schritt 320 dieses Attribut empfängt.

Für den Fall, dass die Prüfung in dem Schritt 322 ergibt, dass die Response korrekt ist, wird in dem Schritt 325 zusätzlich geprüft, ob das Attribut 142 zulässig ist, das heißt, ob dieses das Kriterium 136 erfüllt. Ist dies der Fall, so wird in dem Schritt 326 die angeforderte Funktion freigegeben und erfüllt; im gegenteiligen Fall wird in dem Schritt 328 der Vorgang abgebrochen und beispielsweise eine Meldung, die dieses signalisiert, über die Anzeigevorrichtung 108 ausgegeben.

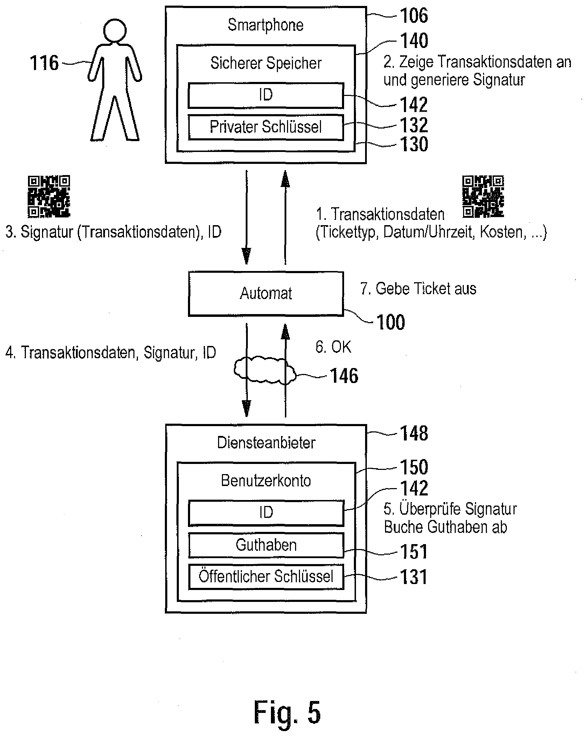

Die Figur 5 zeigt ein Blockdiagramm einer weiteren Ausführungsform eines erfindungsgemäßen elektronischen Systems. Bei dieser Ausführungsform ist der Automat 100 als Ticketautomat, wie zum Beispiel Fahrkartenautomat, ausgebildet.

Der Automat 100 kann zum Beispiel über ein Netzwerk 146 auf eine Datenbank 148, zum Beispiel eines Diensteanbieters, zugreifen. In der Datenbank ist für jeden der registrierten Nutzer ein Datenbankeintrag 150 angelegt, auf den mit einem dem betreffenden Nutzer eindeutig zugeordneten Identifikator (ID) 142 als Zugriffsschlüssel zugegriffen werden kann. Der Datenbankeintrag 150 beinhaltet ferner ein Benutzerkonto für ein Prepaid- oder Postpaid-Bezahlverfahren, wie zum Beispiel einen Prepaid-Guthabenbetrag 151. Ferner kann der Datenbankeintrag 150 den öffentlichen Schlüssel 131 des betreffenden Nutzers, für den der Datenbankeintrag 150 angelegt ist, beinhalten.

Zum Erwerb eines Tickets kann der Nutzer 116 wie folgt vorgehen:
1. Zunächst wählt der Nutzer an dem Automaten 100 das gewünschte Ticket aus, wie zum Beispiel über die Anzeige 108, die als Touchscreen ausgebildet sein kann (vergleiche Ausführungsform gemäß Figur 1). Durch diese Auswahl eines gewünschten Tickets legt der Nutzer 116 Transaktionsdaten fest, wie zum Beispiel den Tickettyp, Datum und Uhrzeit, zum Beispiel der Abreise oder des Beginns einer gewünschten Veranstaltung, der Kosten, etc. Diese Transaktionsdaten dienen bei der hier betrachteten Ausführungsform als Challenge, welche von dem Automat 100 in Form des ersten Musters auf optischem Wege zu dem Nutzergerät 106, welches hier beispielsweise als Smartphone ausgeführt ist, übertragen werden. In dem Smartphone 106 ist bei der hier betrachteten Ausführungsform die ID 142 des Nutzers 116 als Attribut 142 in dem Secure Element 140 gespeichert (vergleiche Ausführungsform gemäß Figur 3).
2. Das Nutzergerät 106 antwortet hier auf die empfangene Challenge, das heißt die Transaktionsdaten, durch Erzeugung einer Response, indem diese Transaktionsdaten mithilfe des privaten Schlüssels 132 signiert werden. Ferner können die Transaktionsdaten auf der Anzeigevorrichtung 124 des Nutzergeräts 106 angezeigt werden.
3. Beispielsweise nach Eingabe einer Bestätigung in das Nutzergerät 106 durch den Nutzer 116 wird das zweite Muster erzeugt, in welches neben den signierten Transaktionsdaten, das heißt der Response, die aus dem Secure Element 140 ausgelesene ID 142 des Nutzers 116 eingeht, sodass der Automat 100 zusätzlich zu der Response auch die ID des Nutzers 116 empfängt.
4. Der Automat 100 sendet dann die Transaktionsdaten, deren von dem Nutzergerät 106 empfangene Signatur sowie die ID 142 des Nutzers 116 an die Datenbank 148, beispielsweise über ein Netzwerk 146. Alternativ kann die Datenbank 148 auch einen integralen Bestandteil des Automat 100 bilden, sodass eine Übertragung über das Netzwerk 146 nicht erforderlich ist.
5. Nach Empfang dieser Daten greift die Datenbank 148 mithilfe der ID 142 auf den Datenbankeintrag 150 zu, um den öffentlichen Schlüssel 131 des Nutzers 116 auszulesen und mithilfe dieses öffentlichen Schlüssels 131 die Signatur zu verifizieren. Wenn die Signatur valide ist, wird anschließend der Kostenbetrag gemäß den Transaktionsdaten von dem in dem Datenbankeintrag 150 gespeicherten Guthaben 151 des Nutzers 116 abgebucht und anschließend signalisiert die Datenbank 148 die erfolgreiche Ausführung dieses Vorgangs an den Automat 100, welcher daraufhin das gewünschte Ticket ausgibt.

Besonders vorteilhaft ist, dass es auch bei dieser Ausführungsform nicht erforderlich ist, dass das Nutzergerät 106 über ein Netzwerk mit dem Automat 100 kommuniziert, welches die Möglichkeit von Relay-Angriffen erschwert. Ein weiterer Vorteil ist, dass der Erwerb des Tickets auch dann möglich ist, wenn sich das Nutzergerät 106 außerhalb der Funkabdeckung eines Mobilfunknetzes oder eines WLAN befindet.

Alternativ kann auch bei dieser Ausführungsform ein Challenge-Response Verfahren basierend auf einem symmetrischen Schlüssel verwendet werden. In diesem Fall beinhaltet der Datenbankeintrag 150 anstelle des öffentlichen Schlüssels 131 den symmetrischen Schlüssel des betreffenden Nutzers, für den der Datenbankeintrag 150 angelegt ist. Dieser symmetrischen Schlüssel ist dann anstelle des privaten Schlüssels 132 in dem Speicher 140 des Nutzergeräts 106 gespeichert.

### Bezugszeichenliste

- 100: Automat
- 102: Funktion
- 104: Eingabevorrichtung
- 106: Nutzergerät
- 108: Anzeigevorrichtung
- 110: Kamera
- 112: Prozessor
- 114: Programmmodul
- 114': Programmmodul
- 116: Nutzer
- 118: Programmmodul
- 118': Programmmodul
- 120: Programmmodul
- 120': Programmmodul
- 122: Programmmodul
- 124: Anzeigevorrichtung
- 126: Kamera
- 128: Prozessor
- 130: elektronischer Speicher
- 131: öffentlicher Schlüssel
- 132: privater Schlüssel
- 134: Speicher
- 136: Kriterium
- 138: Programmmodul
- 140: Secure Element
- 142: Attribut
- 144: Programmmodul
- 146: Netzwerk
- 148: Datenbank
- 150: Datenbankeintrag
- 152: Guthaben

## Patentansprüche

1. Verfahren zur Authentisierung eines Nutzers (116) gegenüber einem Automat (100) mit folgenden Schritten:
- Erzeugung einer Challenge durch den Automat,
- Erzeugung eines ersten Musters, in das die Challenge codiert ist, durch den Automaten,
- Anzeige des ersten Musters auf einer Anzeigevorrichtung (108) des Automat,
- optische Aufnahme des ersten Musters durch ein Nutzergerät (106),
- Decodierung des ersten Musters zum Empfang der Challenge durch das Nutzergerät,
- Erzeugung einer Response auf die Challenge durch das Nutzergerät,
- Erzeugung eines zweiten Musters, in das die Response codiert ist, durch das Nutzergerät,
- Anzeige des zweiten Musters auf eine Anzeigevorrichtung (124) des Nutzergeräts,
- optische Aufnahme des zweiten Musters durch den Automaten,
- Decodierung des zweiten Musters zum Empfang der Response durch den Automaten,
- Prüfung der Korrektheit der Response durch den Automaten,
- unter der Voraussetzung, dass die Response korrekt ist, Erfüllung einer Funktion durch den Automaten,
wobei das Nutzergerät Zugriff auf einen elektronischen Speicher (130) eines Secure Elements (140) besitzt, in dem ein privater Schlüssel (132) eines dem Nutzer (116) zugeordneten asymmetrischen kryptografischen Schlüsselpaars und ein Attribut (142) des Nutzers gespeichert sind,
wobei in dem ersten Muster neben der Challenge eine Attributanforderung codiert ist, sodass der Automat (100) dem Nutzergerät (106) signalisiert, dass das Nutzergerät das Attribut (142) an den Automaten (100) übertragen soll,
wobei das Attribut (142) von dem Nutzergerät (106) ausgelesen und neben der Response in das zweite Muster codiert,
wobei der Nutzer in den Automat eine Transaktionsanforderung zur Anforderung einer Transaktion eingibt, wobei die Challenge Transaktionsdaten der angeforderten Transaktion beinhaltet, und wobei die Response durch Signierung der Transaktionsdaten durch das Nutzergerät unter Verwendung des privaten Schlüssels erzeugt wird, wobei es sich bei der Erfüllung der Funktion um die Durchführung der angeforderten Transaktion handelt,
wobei das Attribut (142) des Nutzers durch Decodierung des zweiten Musters durch den Automat empfangen wird, wobei der Automat (100) das Attribut (142) mit einem vorgegebenen Kriterium (136) vergleicht und wobei die Erfüllung der Funktion durch den Automat nur unter der weiteren Voraussetzung erfolgt, dass das Attribut (142) des Nutzers das vorgegebene Kriterium (136) erfüllt.

2. Verfahren nach Anspruch 1, wobei es sich bei dem Automat um einen Verkaufsautomat handelt, wie zum Beispiel einen Getränkeautomat oder einen Zigarettenautomat, oder um einen Bankautomat.

3. Verfahren nach einem der vorhergehenden Ansprüche, wobei es sich bei dem Automat um einen Ticketautomat, insbesondere einen Fahrkartenautomaten, handelt, wobei die Challenge eine oder mehrere der folgenden Daten beinhaltet: Tickettyp, Reisedaten, insbesondere Abreiseort, Ankunftsort, Abreisezeitpunkt, Ankunftszeitpunkt, und/oder Kosten, wobei unter der Voraussetzung der Korrektheit der Response die Funktion der Erzeugung des von dem Nutzer angeforderten Tickets durch den Automaten erfüllt wird.

4. Verfahren nach einem der vorhergehenden Ansprüche, wobei es sich bei dem Automaten um ein Zugangskontrollsystem handelt, wobei unter der Voraussetzung der Korrektheit der Response die Funktion von dem Automaten erbracht wird, indem eine Zugangssperre für den Nutzer aufgehoben wird.

5. Verfahren nach einem der vorhergehenden Ansprüche, wobei das erste und/oder das zweite Muster als ein QR-Code oder Flicker-Code ausgebildet sind.

6. Verfahren nach einem der vorhergehenden Ansprüche, wobei das erste und/oder das zweite Muster jeweils als statisches Muster oder als zeitliche Reihenfolge mehrerer Muster ausgebildet ist.

7. Verfahren nach einem der vorhergehenden Ansprüche, wobei das Nutzergerät eine drahtlose Netzwerk-Schnittstelle, insbesondere zur Verbindung mit einem digitalen Mobilfunknetz und/oder einem WLAN, hat, und dass keine Verbindung der Netzwerk-Schnittstelle zu einem Netzwerk besteht.

8. Verfahren nach einem der vorhergehenden Ansprüche, wobei der Automat Zugriff auf eine Datenbank (148) hat, in der Registrierungsdaten von Nutzern gespeichert sind, wobei die Registrierungsdaten des Nutzers zumindest das Attribut (142) des Nutzers in Form eines Identifikators des Nutzers und Kontodaten (151) des Nutzers beinhalten und der Identifikator durch Decodierung des zweiten Musters durch den Automaten empfangen wird, sodass der Automat mit dem Identifikator als Zugriffsschlüssel auf die Datenbank zugreift, um das Konto des Nutzers entsprechend der angeforderten Transaktion zu belasten.

9. Verfahren nach Anspruch 8, wobei der öffentliche Schlüssel (131) des Nutzers zu den in der Datenbank gespeicherten Registrierungsdaten gehört.

10. Verfahren nach Anspruch 8 oder 9, wobei es sich bei dem Nutzergerät um ein Telekommunikationsgerät, insbesondere ein Smartphone, handelt, und wobei das Smartphone Zugriff auf ein Secure Element hat, welches den elektronischen Speicher beinhaltet, wobei es sich bei dem Secure Element insbesondere um eine Chipkarte, wie zum Beispiel eine SIM-Karte, handelt.

11. Computerprogrammprodukt, insbesondere digitales Speichermedium, mit ausführbaren Programminstruktionen (114', 118', 120') zur Authentifizierung eines Nutzers (116) gegenüber einem Automat (100), wobei durch Ausführung der Programminstruktionen durch ein Nutzergerät, welches Zugriff auf einen elektronischen Speicher (130) eines Secure Elements (140) besitzt, in dem ein privater Schlüssel (132) eines dem Nutzer (116) zugeordneten asymmetrischen kryptografischen Schlüsselpaars und ein Attribut (142) des Nutzers gespeichert sind, die folgenden Schritte durchgeführt werden:
- optische Aufnahme eines ersten Musters von der Anzeigevorrichtung des Automaten,
- Decodierung des ersten Musters zum Empfang einer Challenge des Automaten, wobei die Challenge Transaktionsdaten einer angeforderten Transaktion beinhaltet, die der Nutzer in den Automat zur Anforderung einer Transaktion eingibt, wobei in dem ersten Muster neben der Challenge eine Attributanforderung codiert ist, sodass der Automat (100) dem Nutzergerät (106) signalisiert, dass das Nutzergerät das Attribut (142) an den Automaten (100) übertragen soll,
- Erzeugung einer Response auf die Challenge, wobei die Response durch Signierung der Transaktionsdaten durch das Nutzergerät unter Verwendung des privaten Schlüssels (132) erzeugt wird,
- Auslesen des Attributs (142),
- Erzeugung eines zweiten Musters, in das die Response und das Attribut (142) codiert ist,
- Anzeige des zweiten Musters auf eine Anzeigevorrichtung des Nutzergeräts.

12. Computerprogrammprodukt, insbesondere digitales Speichermedium, mit ausführbaren Programminstruktionen (114, 116, 120, 122) zur Authentifizierung eines Nutzers (116) gegenüber einem Automat (100), wobei durch Ausführung der Programminstruktionen durch den Automat die folgenden Schritte durchgeführt werden:
- Erzeugung einer Challenge, wobei die Challenge Transaktionsdaten einer angeforderten Transaktion beinhaltet, die der Nutzer in den Automat zur Anforderung einer Transaktion eingibt,
- Erzeugung eines ersten Musters, in das die Challenge codiert ist, wobei in dem ersten Muster neben der Challenge eine Attributanforderung codiert ist, sodass der Automat (100) dem Nutzergerät (106) signalisiert, dass das Nutzergerät das Attribut (142) an den Automaten (100) übertragen soll,
- Anzeige des ersten Musters auf einer Anzeigevorrichtung (108) des Automat,
- optische Aufnahme eines zweiten Musters von einer Anzeigevorrichtung (124) des Nutzergeräts durch den Automat,
- Decodierung des zweiten Musters zum Empfang der Response und des Attributs (142) des Nutzers durch den Automaten, wobei die Response durch Signierung der Transaktionsdaten durch das Nutzergerät unter Verwendung eines privaten Schlüssels (132) eines dem Nutzer (116) zugeordneten asymmetrischen kryptografischen Schlüsselpaars erzeugt wird,
- Prüfung der Korrektheit der Response durch den Automaten,
- Vergleichen des Attributs (142) mit einem vorgegebenen Kriterium (136) durch den Automat,
- unter der Voraussetzung, dass die Response korrekt ist und das Attribut (142) des Nutzers das vorgegebene Kriterium (136) erfüllt, Erfüllung einer Funktion durch den Automaten, wobei es sich bei der Erfüllung der Funktion um die Durchführung der angeforderten Transaktion handelt.

13. Automat, insbesondere Verkaufsautomat, Ticketautomat, Bankautomat oder Zugangskontrollsystem, mit
- einer Eingabevorrichtung (104) zur Eingabe einer Transaktionsanforderung zur Anforderung einer Transaktion durch einen Nutzer in den Automat,
- einem Challenge-Generator (114) zur Erzeugung einer Challenge, wobei die Challenge Transaktionsdaten der angeforderten Transaktion beinhaltet,
- einem Mustergenerator (118) zur Erzeugung eines ersten Musters, in das die Challenge codiert ist, wobei in dem ersten Muster neben der Challenge eine Attributanforderung codiert ist, sodass der Automat (100) dem Nutzergerät (106) signalisiert, dass das Nutzergerät das Attribut (142) an den Automaten (100) übertragen soll,
- einer Anzeigevorrichtung (108) zur Anzeige des ersten Musters,
- einem optischen Sensor (110) zur Aufnahme eines zweiten Musters von einer Anzeigevorrichtung (124) eines Nutzergeräts (106),
- einem Musterdecoder (120) zur Decodierung des zweiten Musters, um eine Response des Nutzergeräts auf die Challenge und das Attribut (142) des Nutzers zu empfangen, wobei die Response durch Signierung der Transaktionsdaten durch das Nutzergerät unter Verwendung eines privaten Schlüssels (132) eines dem Nutzer (116) zugeordneten asymmetrischen kryptografischen Schlüsselpaars erzeugt wird,
- einem Prüfmodul (114) zur Prüfung der Korrektheit der Response und Vergleichen des Attributs (142) mit einem vorgegebenen Kriterium (136),
- einem Steuerungsmodul (122) zur Erfüllung einer Funktion unter der Voraussetzung, dass die Prüfung durch das Prüfmodul die Korrektheit der Response und ein Erfüllen des vorgegebenen Kriteriums (136) durch das Attribut (142) des Nutzers ergibt, wobei es sich bei der Erfüllung der Funktion um die Durchführung der angeforderten Transaktion handelt.

14. Automat nach Anspruch 13, mit Mitteln zum Zugriff auf eine Datenbank (150), in der Registrierungsdaten (131, 142, 151) von Nutzern gespeichert sind, wobei die Registrierungsdaten eines Nutzers das Attribut (142) des Nutzers in Form eines Identifikators des Nutzers und Kontodaten des Nutzers beinhalten, wobei die Mittel zum Zugriff dazu ausgebildet sind, mithilfe des empfangenen Identifikators als Zugriffsschlüssel auf die Datenbank zuzugreifen, um das Konto des Nutzers entsprechend der von dem Automaten erfüllten Funktion zu belasten.

15. Elektronisches System mit einem Automaten nach Anspruch 13 oder 14 und einem Nutzergerät, insbesondere einem Telekommunikationsgerät, beispielsweise einem Smartphone, wobei das Nutzergerät Zugriff auf einen elektronischen Speicher (130) eines Secure Elements (140) besitzt, in dem ein privater Schlüssel (132) eines dem Nutzer (116) zugeordneten asymmetrischen kryptografischen Schlüsselpaars und ein Attribut (142) des Nutzers gespeichert sind, wobei das Nutzergerät Folgendes umfasst:
- einen optischen Sensor (126) zur Aufnahme des ersten Musters von der Anzeigevorrichtung des Automaten,
- einen Muster-Decoder (120') zur Decodierung des ersten Musters zum Empfang der Challenge durch das Nutzergerät, wobei die Challenge Transaktionsdaten der angeforderten Transaktion beinhaltet, wobei in dem ersten Muster neben der Challenge eine Attributanforderung codiert ist, sodass der Automat (100) dem Nutzergerät (106) signalisiert, dass das Nutzergerät das Attribut (142) an den Automaten (100) übertragen soll,
- einen Response-Generator (114') zur Erzeugung einer Response auf die Challenge, wobei die Response durch Signierung der Transaktionsdaten durch das Nutzergerät erzeugt wird unter Verwendung des privaten Schlüssels (132),
- einen Muster-Generator (118') zur Erzeugung des zweiten Musters, in das die Response und das aus dem Speicher (130) ausgelesene Attribut (142) codiert ist,
- eine Anzeigevorrichtung (124) zur Anzeige des zweiten Musters.

## Claims

1. Method for authenticating a user (116) to a machine (100), comprising the following steps:
- generating a challenge by the machine;
- generating a first pattern, in which the challenge is coded, by the machine;
- displaying the first pattern on a display device (108) of the machine;
- optically recording the first pattern by a user device (106);
- decoding the first pattern to receive the challenge by the user device;
- generating a response to the challenge by the user device;
- generating a second pattern, in which the response is coded, by the user device;
- displaying the second pattern on a display device (124) of the user device;
- optically recording the second pattern by the machine;
- decoding the second pattern to receive the response by the machine;
- checking the correctness of the response by the machine; and
- on the condition that the response is correct, fulfilling a function by the machine;
wherein the user device has access to an electronic memory (130) of a secure element (140), in which electronic memory a private key (132) of an asymmetric cryptographic key pair assigned to the user (116) and an attribute (142) of the user are stored,
wherein, besides the challenge, an attribute request is coded in the first pattern so that the machine (100) signals to the user device (106) that the user device should transmit the attribute (142) to the machine (100),
wherein the attribute (142) is read by the user device (106) and is coded, in addition to the response, in the second pattern,
wherein the user inputs a transaction request into the machine to request a transaction, wherein the challenge includes transaction data of the requested transaction, and wherein the response is generated by signing of the transaction data by the user device with use of the private key, wherein the fulfilment of the function is the execution of the requested transaction,
wherein the attribute (142) of the user is received by decoding of the second pattern by the machine, wherein the machine (100) compares the attribute (142) with a predefined criterion (136), and wherein the function is fulfilled by the machine only on the further condition that the attribute (142) of the user fulfils the predefined criterion (136).

2. Method according to claim 1, wherein the machine is a vending machine, for example a drinks machine or a cigarette machine, or is a cash machine.

3. Method according to one of the preceding claims, wherein the machine is a ticket machine, in particular a travel ticket machine, wherein the challenge includes one or more of the following data: ticket type, travel dates, in particular place of departure, destination, departure time, arrival time, and/or cost, wherein, on the condition of the correctness of the response, the function fulfilled by the machine is the generation by the machine of the ticket requested by the user.

4. Method according to one of the preceding claims, wherein the machine is an access control system, wherein, on the condition of the correctness of the response, the function is provided by the machine by cancelling an access block for the user.

5. Method according to one of the preceding claims, wherein the first and/or the second pattern are formed as a QR code or Flicker code.

6. Method according to one of the preceding claims, wherein the first and/or the second pattern is formed in each case as a static pattern or as a chronological sequence of a plurality of patterns.

7. Method according to one of the preceding claims, wherein the user device has a wireless network interface, in particular for connection to a digital mobile network and/or a WLAN, and wherein there is no connection of the network interface to a network.

8. Method according to one of the preceding claims, wherein the machine has access to a database (148), in which registration data of users are stored, wherein the registration data of the user include at least one attribute (142) of the user in the form of an identifier of the user and account data (151) of the user, and the identifier is received by decoding of the second pattern by the machine so that the machine accesses the database with the identifier as access key in order to debit the account of the user in accordance with the requested transaction.

9. Method according to claim 8, wherein the public key (131) of the user belongs to the registration data stored in the database.

10. The method according to claim 8 or 9, wherein the user device is a telecommunications device, in particular a smartphone, and wherein the smartphone has access to a secure element, which contains the electronic memory, wherein the secure element, in particular, is a chip card, for example a SIM card.

11. Computer program product, in particular digital storage medium, comprising executable program instructions (114', 118', 120') for authenticating a user (116) to a machine (100), wherein, by execution of the program instructions by a user device which has access to an electronic memory (130) of a secure element (140) in which a private key (132) of an asymmetric cryptographic key pair assigned to the user (116) and an attribute (142) of the user are stored, the following steps are carried out:
- optically recording a first pattern from the display device of the machine;
- decoding the first pattern to receive a challenge of the machine, wherein the challenge includes transaction data of a requested transaction which the user inputs into the machine to request a transaction, wherein, besides the challenge, an attribute request is coded in the first pattern so that the machine (100) signals to the user device (106) that the user device should transmit the attribute (142) to the machine (100);
- generating a response to the challenge, wherein the response is generated by signing of the transaction data by the user device with use of the private key (132);
- reading the attribute (142);
- generating a second pattern, in which the response and the attribute (142) is coded;
- displaying the second pattern on a display device of the user device.

12. Computer program product, in particular digital storage medium, with executable program instructions (114, 116, 120, 122) for authenticating a user (116) to a machine (100), wherein, by execution of the program instructions by the machine, the following steps are performed:
- generating a challenge, wherein the challenge includes transaction data of a requested transaction which the user inputs into the machine to request a transaction;
- generating a first pattern, in which the challenge is coded, wherein, besides the challenge, an attribute request is coded in the first pattern so that the machine (100) signals to the user device (106) that the user device should transmit the attribute (142) to the machine (100),
- displaying the first pattern on a display device (108) of the machine,
- optically recording a second pattern from a display device (124) of the user device by the machine,
- decoding the second pattern to receive the response and the attribute (142) of the user by the machine, wherein the response is generated by signing of the transaction data by the user device with use of a private key (132) of an asymmetric cryptographic key pair assigned to the user (116),
- checking the correctness of the response by the machine,
- comparing the attribute (142) with a predefined criterion (136) by the machine,
- on the condition that the response is correct and the attribute (142) of the user fulfils the predefined criterion (136), fulfilling a function by the machine, wherein the fulfilment of the function is the execution of the requested transaction.

13. Machine, in particular a vending machine, ticket machine, cash machine or access control system, comprising
- an input device (104) for inputting a transaction request into the machine to request a transaction by a user,
- a challenge generator (114) for generating a challenge, wherein the challenge includes transaction data of the requested transaction,
- a pattern generator (118) for generating a first pattern, in which the challenge is coded, wherein, besides the challenge, an attribute request is coded in the first pattern so that the machine (100) signals to the user device (106) that the user device should transmit the attribute (142) to the machine (100),
- a display device (108) for displaying the first pattern,
- an optical sensor (110) for recording a second pattern from a display device (124) of a user device (106),
- a pattern decoder (120) for decoding the second pattern in order to receive a response of the user device to the challenge and the attribute (142) of the user, wherein the response is generated by signing of the transaction data by the user device with use of a private key (132) of an asymmetric cryptographic key pair assigned to the user (116),
- a check module (114) for checking the correctness of the response and comparing the attribute (142) with a predefined criterion (136),
- a control module (122) for fulfilling a function on the condition that the check performed by the check module confirms the correctness of the response and a fulfilment of the predefined criterion (136) by the attribute (142) of the user, wherein the fulfilment of the function is the execution of the requested transaction.

14. Machine according to claim 13, comprising means for accessing a database (150), in which registration data (131, 142, 151) of users are stored, wherein the registration data of a user includes the attribute (142) of the user in the form of an identifier of the user and account data of the user, wherein the access means are designed to access the database with the aid of the received identifier as access key in order to debit the account of the user in accordance with the function fulfilled by the machine.

15. Electronic system comprising a machine according to claim 13 or 14 and a user device, in particular a telecommunications device, for example a smartphone, wherein the user device has access to an electronic memory (130) of a secure element (140), in which a private key (132) of an asymmetric cryptographic key pair assigned to the user (116) and an attribute (142) of the user are stored, wherein the user device comprises the following:
- an optical sensor (126) for recording the first pattern from the display device of the machine,
- a pattern decoder (120') for decoding the first pattern to receive the challenge by the user device, wherein the challenge includes transaction data of the requested transaction, wherein, besides the challenge, an attribute request is coded in the first pattern so that the machine (100) signals to the user device (106) that the user device should transmit the attribute (142) to the machine (100),
- a response generator (114') for generating a response to the challenge, wherein the response is generated by signing of the transaction data by the user device with use of the private key (132),
- a pattern generator (118') for generating the second pattern, in which the response and the attribute (142) read from the memory (130) is coded,
- a display device (124) for displaying the second pattern.

## Revendications

1. Procédé d'authentification d'un utilisateur (116) vis-à-vis d'un automate (100) avec les étapes suivantes :
- la création d'une requête par l'automate,
- la création d'un premier motif dans lequel la requête est codée par l'automate,
- l'affichage d'un premier motif sur un dispositif d'affichage (108) de l'automate,
- la capture optique du premier motif par un appareil d'utilisateur (106),
- le décodage du premier motif pour la réception de la requête par l'appareil d'utilisateur,
- la création d'une réponse suite à la requête par l'appareil d'utilisateur,
- la création d'un deuxième motif dans lequel la réponse est codée par l'appareil d'utilisateur,
- l'affichage du deuxième motif sur un dispositif d'affichage (124) de l'appareil d'utilisateur,
- la capture optique du deuxième motif par l'automate,
- le décodage du deuxième motif pour la réception de la réponse par l'automate,
- la vérification de la justesse de la réponse par l'automate,
- l'exécution d'une fonction par l'automate à la condition que la réponse soit correcte,
dans lequel l'appareil d'utilisateur possède un accès à une mémoire électronique (130) d'un élément de sécurité (140) dans lequel une clé privée (132) d'une paire de clés cryptographiques asymétrique associée à l'utilisateur (116) et un attribut (142) de l'utilisateur sont stockés,
dans lequel une demande d'attribut est codée dans le premier motif à côté de la requête de sorte que l'automate (100) signale à l'appareil d'utilisateur (106) que l'appareil d'utilisateur doit transmettre l'attribut (142) à l'automate (100),
dans lequel l'attribut (142) est lu à partir de l'appareil d'utilisateur (106) et est codé dans le deuxième motif à côté de la réponse,
dans lequel l'utilisateur entre une demande de transaction dans l'automate pour la demande d'une transaction, où la requête contient des données de transaction de la transaction demandée, et où la réponse est générée par la signature des données de transaction par l'appareil d'utilisateur moyennant l'emploi de la clé privée, où, dans le cas de l'exécution de la fonction, il s'agit de l'exécution de la transaction demandée,
dans lequel l'attribut (142) de l'utilisateur est reçu par l'automate par un décodage du deuxième motif, où l'automate (100) compare l'attribut (142) avec un critère prédéfini (136) et où l'exécution de la fonction par l'automate n'a lieu qu'à la condition nouvelle que l'attribut (142) de l'utilisateur remplisse le critère prédéfini (136).

2. Procédé selon la revendication 1, dans lequel, dans le cas de l'automate, il s'agit d'un automate de vente, comme, par exemple, un automate de boissons ou un automate de cigarettes, ou il s'agit d'un automate de banque.

3. Procédé selon l'une des revendications précédentes, dans lequel, dans le cas de l'automate, il s'agit d'un automate de tickets, notamment d'un automate de carte de circulation, où la requête contient une ou plusieurs parmi les données suivantes : un type de ticket, des données de voyage, notamment un lieu de départ, un lieu d'arrivée, une heure de départ, une heure d'arrivée, et/ou des frais, où la fonction de la génération du ticket demandé par l'utilisateur est exécutée par l'automate à la condition que la réponse soit correcte.

4. Procédé selon l'une des revendications précédentes, dans lequel, dans le cas de l'automate, il s'agit d'un système de contrôle d'accès, où la fonction est apportée par l'automate à la condition de la justesse de la réponse, en ce qu'une interdiction d'accès est levée pour l'utilisateur.

5. Procédé selon l'une des revendications précédentes, dans lequel le premier et/ou le deuxième motif sont conçus sous forme d'un code QR ou d'un code Flicker.

6. Procédé selon l'une des revendications précédentes, dans lequel le premier et/ou le deuxième motif sont respectivement conçus sous forme de motif statique ou sous forme d'une suite de plusieurs motifs dans le temps.

7. Procédé selon l'une des revendications précédentes, dans lequel l'appareil d'utilisateur a une interface réseau sans fil, notamment prévue pour la connexion avec un réseau radio mobile numérique, et/ou un WLAN, et qu'aucune connexion de l'interface réseau n'est établie vers un réseau.

8. Procédé selon l'une des revendications précédentes, dans lequel l'automate a un accès à une banque de données(148) dans laquelle sont stockées des données d'enregistrement d'utilisateurs, où les données d'enregistrement de l'utilisateur contiennent au moins l'attribut (142) de l'utilisateur sous la forme d'un identificateur de l'utilisateur et des données de compte (151) de l'utilisateur, et l'identificateur est réceptionné par l'automate par le décodage du deuxième motif, de sorte que l'automate a accès à la banque de données avec l'identificateur servant de clé d'accès, afin de charger le compte de l'utilisateur de manière correspondante à la transaction demandée.

9. Procédé selon la revendication 8, dans lequel la clé publique (131) de l'utilisateur fait partie des données d'enregistrement stockées dans la banque de données.

10. Procédé selon la revendication 8 ou la revendication 9, dans lequel, dans le cas de l'appareil d'utilisateur, il s'agit d'un appareil de télécommunication, notamment d'un Smartphone, et où le Smartphone a accès à un élément de sécurité, lequel contient une mémoire électronique, où, dans le cas de l'élément de sécurité, il s'agit notamment d'une carte à puce, comme, par exemple, une carte SIM.

11. Produit programme informatique, notamment support de stockage numérique, avec des instructions de programme (114' ; 118' ; 120') exécutables pour l'authentification d'un utilisateur (116) vis-à-vis d'un automate (100), dans lequel, par l'exécution des instructions de programme par un appareil d'utilisateur, lequel possède un accès à une mémoire électronique (130) d'un élément de sécurité (140), dans lequel sont stockés une clé privée (132) d'une paire de clés cryptographiques asymétrique associée à l'utilisateur (116) et un attribut (142) de l'utilisateur, les étapes suivantes sont exécutées :
- la capture optique d'un premier motif par le dispositif d'affichage de l'automate,
- le décodage du premier motif pour la réception d'une requête de l'automate, où la requête contient des données de transaction d'une transaction demandée que l'utilisateur entre dans l'automate pour la demande d'une transaction, où une demande d'attribut est codée à côté de la requête dans le premier motif de sorte que l'automate (100) signale à l'appareil d'utilisateur (106) que l'appareil d'utilisateur doit transmettre l'attribut (142) à l'automate (100),
- la création d'une réponse suite à la requête, où la réponse est générée par la signature des données de transaction par l'appareil d'utilisateur moyennant l'emploi de la clé privée (132),
- la lecture de l'attribut (142),
- la création d'un deuxième motif dans lequel la réponse et l'attribut (142) sont codés,
- l'affichage du deuxième motif sur un dispositif d'affichage de l'appareil d'utilisateur.

12. Produit programme informatique, notamment support de stockage numérique, avec des instructions de programme (114, 116, 120, 122) exécutables pour l'authentification d'un utilisateur (116) vis-à-vis d'un automate (100), dans lequel, par l'exécution des instructions de programme par l'automate les étapes suivantes sont exécutées :
- la création d'une requête, où la requête contient des données de transaction d'une transaction demandée, qui est indiquée par l'utilisateur dans l'automate pour la demande d'une transaction,
- la création d'un premier motif dans lequel le requête est codée, où une demande d'attribut est codée dans le premier motif à côté de la requête de sorte que l'automate (100) signale à l'appareil d'utilisateur (106) que l'appareil d'utilisateur doit transmettre l'attribut (142) à l'automate (100),
- l'affichage d'un premier motif sur un dispositif d'affichage (108) de l'automate,
- la capture optique d'un deuxième motif par un dispositif d'affichage (124) de l'appareil d'utilisateur par l'automate,
- le décodage du deuxième motif pour la réception de la réponse et de l'attribut (142) de l'utilisateur par l'automate, où la réponse est générée par la signature des données de transaction par l'appareil d'utilisateur moyennant l'emploi d'une clé privée (132) d'une paire de clés cryptographiques asymétrique associée à l'utilisateur (116),
- la vérification de la justesse de la réponse par l'automate,
- la comparaison de l'attribut (142) avec un critère prédéfini (136) par l'automate,
- l'exécution d'une fonction par l'automate à la condition que la réponse soit correcte et que l'attribut (142) de l'utilisateur remplisse le critère prédéfini (136), où, dans le cas de l'exécution de la fonction, il s'agit de l'exécution de la transaction demandée.

13. Automate, notamment automate de vente, automate de tickets, automate de banque ou système de contrôle d'accès, avec
- un dispositif de saisie (104) pour l'entrée d'une demande de transaction pour la demande d'une transaction par un utilisateur dans l'automate,
- un générateur de requête (114) pour la génération d'une requête, où la requête contient des données de transaction de la transaction demandée,
- un générateur de motifs (118) pour la génération d'un premier motif dans lequel la requête est codée, où une demande d'attribut est codée dans le premier motif à côté de la requête de sorte que l'automate (100) signale à l'appareil d'utilisateur (106) que l'appareil d'utilisateur doit transmettre l'attribut (142) à l'automate (100),
- un dispositif d'affichage (108) pour l'affichage du premier motif,
- un capteur optique (110) pour la capture d'un deuxième motif d'un dispositif d'affichage (124) d'un appareil d'utilisateur (106),
- un décodeur de motifs (120) pour le décodage du deuxième motif afin de réceptionner une réponse de l'appareil d'utilisateur suite à la requête et l'attribut (142) de l'utilisateur, où la réponse est générée par la signature des données de transaction par l'appareil d'utilisateur moyennant l'emploi d'une clé privée (132) d'une paire de clés cryptographiques asymétrique associée à l'utilisateur (116),
- un module de vérification (114) pour la vérification de la justesse de la réponse et la comparaison de l'attribut (142) avec un critère prédéfini (136),
- un module de commande (122) pour l'exécution d'une fonction à la condition que la vérification par le module de vérification ait pour résultat la justesse de la réponse et une satisfaction au critère prédéfini (136) par l'attribut (142) de l'utilisateur, où, dans le cas de l'exécution de la fonction, il s'agit de l'exécution de la transaction demandée.

14. Automate selon la revendication 13, avec des moyens permettant l'accès à une banque de données (150) dans laquelle sont stockées des données d'enregistrement (131, 142, 151) d'utilisateurs, où les données d'enregistrement d'un utilisateur contiennent l'attribut (142) de l'utilisateur sous la forme d'un identificateur de l'utilisateur et des données de compte de l'utilisateur, où les moyens permettant l'accès sont conçus pour avoir accès à la banque de données à l'aide de l'identificateur reçu servant de clé d'accès afin de charger le compte de l'utilisateur de manière correspondante à la fonction remplie par l'automate.

15. Système électronique avec un automate selon la revendication 13 ou la revendication 14 et un appareil d'utilisateur, notamment un appareil de télécommunication, par exemple, un Smartphone, où l'appareil d'utilisateur possède un accès à une mémoire électronique (130) d'un élément de sécurité (140), dans lequel une clé privée (132) d'une paire de clés cryptographiques asymétrique associée à l'utilisateur (116) et un attribut (142) de l'utilisateur sont stockés, où l'appareil d'utilisateur comprend ce qui suit :
- un capteur optique (126) pour la capture du premier motif du dispositif d'affichage de l'automate,
- un décodeur de motifs (120') pour le décodage du premier motif afin de réceptionner la requête par l'appareil d'utilisateur, où la requête contient des données de transaction de la transaction demandée, où une demande d'attribut est codée dans le premier motif à côté de la requête de sorte que l'automate (100) signale à l'appareil d'utilisateur (106) que l'appareil d'utilisateur doit transmettre l'attribut (142) à l'automate (100),
- un générateur de réponse (114') pour la génération d'une réponse suite à la requête, où la réponse est générée par la signature des données de transaction par l'appareil d'utilisation moyennant l'emploi de la clé privée (132),
- un générateur de motifs (118') pour la génération du deuxième motif dans lequel la réponse et l'attribut (142) lu à partir de la mémoire (130) sont codés,
- un dispositif d'affichage (124) pour l'affichage du deuxième motif.
